# EUROPEAN PATENT SPECIFICATION

(11) **EP 1 830 513 B1**
(45) Date of publication and mention of the grant of the patent: **20.01.2010**
(21) Application number: 05820621.0
(22) Date of filing: 21.12.2005
(51) Int. Cl.: H04L 9/32

(54) **A METHOD FOR IMPLEMENTING THE FUNCTION OF THE SCENE SECURITY AND A SYSTEM THEREOF**
VERFAHREN ZUR IMPLEMENTIERUNG DER ORTSSICHERHEITSFUNKTION UND SYSTEM DAFÜR
PROCEDE ET SYSTEME DE MISE EN OEUVRE D'UNE FONCTION DE SECURITE DE SITE

(30) Priority: 23.12.2004 CN 200410102484
(43) Date of publication of application: 05.09.2007
(73) Proprietor: Huawei Technologies Co., Ltd., Longgang District, Shenzhen Guangdong 518129 (CN)
(72) Inventor: YANG, Pengliang, Huawei Administration Building, Shenzhen, Guangdong 518129 (CN)
(74) Representative: Kreuz, Georg Maria
(86) International application number: PCT/CN2005/002271
(87) International publication number: WO 2006/066507

(56) References cited:
- WO-A-01/01714
- WO-A-98/25433
- WO-A-2004/089021
- CN-A- 1 543 115
- KR-A- 200 402 310
- US-A1- 2003 008 662
- US-A1- 2004 147 255
- US-A1- 2004 228 460

## Description

### Field of the Technology

The present invention relates to communication technologies, and particularly, to a method and a system for keeping a scene secret.

### Background of the Invention

Now, along with the development of mobile communication technologies, various mobile terminals have come into existence. For example, a mobile phone, such as the mobile phone which not only has basic functions of communication, but also has a function of photo taking and a function of recording, has been developed. A user of such a mobile phone can send a photo taken in a scene or a voice recorded in the scene to other terminals, which meets the user demand and satisfies the user greatly. However, this also brings a trouble to the administrator of a specific area.

Patent application US 2004/228460 A1 reveals a method of controlling operations of portable communications devices in a local area. Different electronic devices may be given different authorizations so that local control device may inhibit a particular functionality in some devices and allow the same functionality in other devices. When a portable communications device enters a cell covered by a base station acting as local control device, the portable communications device may identify itself to the base station using an identification communication which includes the position of the electronic device and the identification of the electronic device. In addition, upon detecting the presence of a local control device, the portable communications device may transmit an identification communication providing an identifier for the electronic device and providing identification of functionalities provided by the electronic device. The local control device may transmit inhibit communications used to inhibit functionalities of portable communications devices within range of the local control device.

In some special situations, such as in an area involved with national security and to be kept secret, it is necessary to forbid persons in the area to transmit the contents of the current scene outward in any manner. In general, it is needed that persons entering the area hand over their communication means, such as a mobile phone, for centralized custody. This needs an additional service of keeping mobile phones. Furthermore, if there is no good cooperation, it is impossible to completely restrict the persons in the area to communicate with the outside so that information which should be kept secret can be taken out in various manners, such as by a call, a record and a photo.

### Summary of the Invention

An embodiment of the present invention provides a method and a system for keeping a scene secret which forbids a restricted function of a mobile terminal in a specific scene to be kept secret.

The method for keeping a scene secret provided by an embodiment of the present invention includes:
setting, at a network side, restricted area information containing an identifier of the restricted area, an identifier of a restricted user and a restricted user function in the restricted area;
tracing, by the network side, the mobile terminal upon receiving a location registration request from the mobile terminal, wherein the location registration request contains user capability information of the mobile terminal and is sent by the mobile terminal when the mobile terminal is turned on; and
judging, by the network side, whether the mobile terminal belongs to the restricted user according to the restricted area information if determining that the mobile terminal has entered the restricted area, and forbidding the mobile terminal to execute the restricted user function according to the user capability information if the mobile terminal belongs to the restricted user.

The process of tracing the mobile terminal upon receiving the location registration request includes:
tracing the mobile terminal upon receiving the location registration request by a mobile terminal positioning system;
the process of judging whether the mobile terminal has entered the restricted area includes:
   judging whether the location of the mobile terminal belongs to the area corresponding to the identifier of the restricted area, if yes, determining that the mobile terminal has entered the restricted area; otherwise, determining that the mobile terminal is out of the restricted area.
The method further includes:
   upon receiving a call request containing numbers of a calling user and a called user sent by the mobile terminal,
   judging, by the network side, whether the calling user or the called user is the restricted user, and determining the restricted use function according to the numbers of the calling user and the called user;
   forbidding, by the network side, communicate between the calling user and the called user by using the restricted user function if one of the calling user and the called user is the restricted user; allowing, by the network side, communicating between the calling user and the called user if both the calling user and the called user are not restricted users.

The process of forbidding the mobile terminal to execute the restricted user function includes:
sending a communication forbidding notification containing the restricted user function of the mobile terminal to the mobile terminal;
disabling the corresponding user function according to the restricted user function in the communication forbidding notification upon receiving the communication forbidding notification.

The restricted user function includes a function of communication; and
the process of forbidding the mobile terminal to execute the restricted user function includes:
forbidding the communication by building no connection for the user or refusing to transmit an information flow.

The restricted user function includes a function of camera shooting and/or a function of recording, the method further comprising:
sending a function forbidding notification to the mobile terminal;
disabling the restricted user function.

The restricted user function includes at least one of functions of camera shooting, recording, answering a phone call and sending a connection request.

The restricted user function is determined by restriction levels.

A base station for keeping a scene secret includes:
a first unit, adapted to store restricted area information containing an identifier of the restricted area, an identifier of a restricted user and a restricted user function in the restricted area;
a second unit, adapted to trace a mobile terminal when receiving a location registration request from a mobile terminal, wherein the location registration request contains user capability information of the mobile terminal and is sent by the mobile terminal when the mobile terminal is turned on, judge whether the mobile terminal belongs to the restricted user according to the restricted area information if determining that the mobile terminal has entered the restricted area, and forbid the mobile terminal to execute the restricted user function according to user capability information of the mobile terminal if the mobile terminal belongs to the restricted user.

A system for keeping a scene secret includes:
a mobile terminal and a base station described above.

In one embodiment of the present invention, restricted area information is set at the network side, and the restricted area information is judged whether a mobile terminal belongs to a restricted user when determining that the mobile terminal has entered the restricted area. If the mobile terminal belongs to a restricted user, the mobile terminal is restricted to execute communication and a restricted function of the mobile terminal, such as communication, camera shooting, recording and photo taking. Thereby, the secret of the specific scene could not be transmitted outward through special functions of a mobile terminal.

### Brief Description of the Drawings

Fig.1 shows a schematic flow chart for implementing the first embodiment of the present invention.
Fig.2 shows a schematic flow chart for implementing the second embodiment of the present invention.
Fig.3 shows a schematic diagram of the system in accordance with an embodiment of the present invention.

### Detailed Description of the Invention

In accordance with an embodiment of the present invention, an area to be set as restricted is registered at the network side, and an identifier of a restricted user in the area and a restricted function of a mobile terminal are set at the same time; it is then judged whether a mobile terminal belongs to a restricted user when determining that the mobile terminal has entered the restricted area; if the mobile terminal belongs to the restricted user, the mobile terminal is restricted to execute communication and a specific function, such as camera shooting, recording and photo taking. Furthermore, the restricted user function may be set by setting restriction levels as needed.

The method for judging whether a mobile terminal has entered the restricted area can be implemented in the following ways. The first way is that: the mobile terminal is registered at the network side after the mobile terminal is turned on. The network side starts a location positioning system to trace the mobile terminal upon having registered the mobile terminal and judges whether the mobile terminal has entered the restricted area according to location information acquired by tracing. The second way is that: restricted area information, such as an identifier of the restricted area, is set in the mobile terminal, and the network side broadcasts in the restricted area in real time the restricted area information including an identifier of the restricted area. The mobile terminal compares the received identifier with the identifier of the restricted area set in the mobile terminal to judge whether the two are the same upon entering the area and receiving the broadcasted information. The mobile terminal determines that it has entered the restricted area if the two are the same; otherwise, the mobile terminal determines that it is out of the restricted area. The third way is similar to the second one. The difference is that: in the third way, a positioning enabling parameter of a mobile terminal is further set at the network side, and the network side broadcasts in real time the restricted area information and positioning enabling parameter in the restricted area. The mobile terminal receives the broadcasted information when entering the restricted area, and then sends a location information request to the network side according to the received positioning enabling parameter. The mobile terminal judges whether the location of itself is in the restricted area upon receiving the location information sent by the network side. If it is in the restricted area, the mobile terminal disables the restricted function of its own on its own initiative.

Furthermore, the administrator of each of the restricted areas may choose restricted types of function. For example, the administrator can choose to restrict a mobile terminal in camera shooting and photo taking, or restrict one or several of such communication functions as making a call, VP calling, sending a short message and sending an e-mail.

Of course, the restriction of communication and a specific function on a mobile terminal will be cancelled if it is determined that the mobile terminal has left the restricted area. The methods for determining that the mobile terminal has left the restricted area include but not limited to the following two. The first method is to make the decision through a positioning system, that is, the network side judges whether the mobile terminal is in the restricted area according to the current location of the mobile terminal. The second method is to make the decision through setting a timer by the mobile terminal itself. Specifically, when it is determined that the mobile terminal has entered the restricted area, the timer is started, and if no broadcasted information is received before the timer expires, the mobile terminal determines that it has left the restricted area.

There are multiple methods for forbidding a restricted user to execute communication and a specific function. In the case that the network side determines that the mobile terminal has entered the restricted area, there can be the following methods. One is that: the network side can send to the mobile terminal a communication forbidding notification including the restricted types of function of the mobile terminal according to the restricted types of function that are determined by the network side, then the mobile terminal directly disables the corresponding functions, which may include functions of camera shooting, recording, getting a call and sending a connection request according to the restricted types of function in the notification upon receiving the notification. The other method is that: in the case that the network side determines that one of the calling user and the called user is a restricted user upon receiving a call request with numbers of a calling user and a called user, the network side may directly notify the calling user that "this call is restricted and the communication is forbidden" and forbid the communication by building no connection for the user or refusing to transmit the information flow. Obviously, in this way, only communication of the mobile terminal is restricted, but not those functions of the mobile terminal other than communication. Therefore, regarding some specific functions of a mobile terminal, it is feasible that the network side sends a forbidding notification and the mobile terminal disables the corresponding function according to the forbidding notification.

The technical solutions of the present invention are hereinafter described in detail with reference to specific embodiments.

The core idea of the first embodiment is that: restricted area information and an identifier of a restricted user are set at the network side, and the user of which the location has been registered is traced by a positioning system; the network determines the restricted types of function of the user if the network side determines that the user is a restricted user after the mobile terminal has entered the restricted area, and then forbids the function of the mobile terminal according to the restricted types of function.

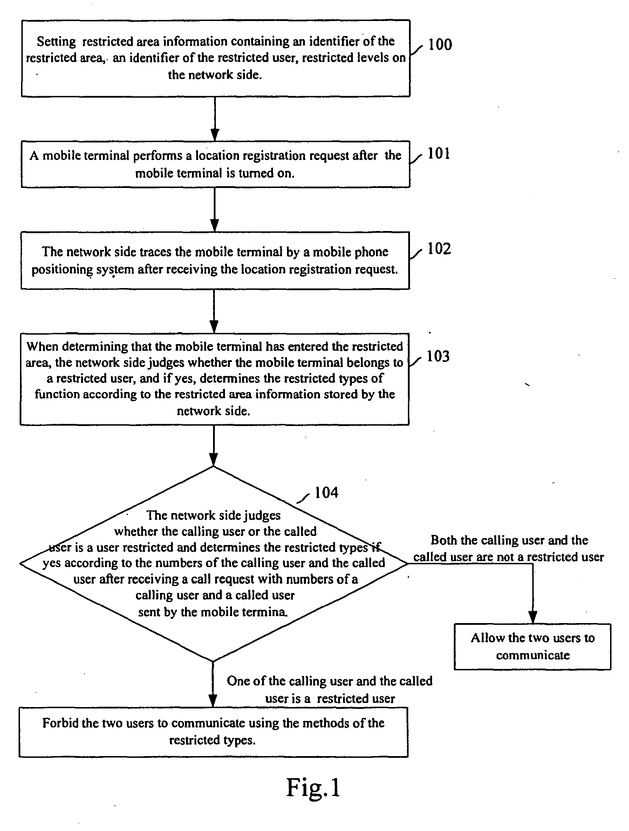

As shown in Fig.1, the process of restricting the user to communicate in a specific area in accordance with an embodiment is described as follows.

Step 100: restricted area information, which specifically includes an identifier of the restricted area, an identifier of a restricted user, restriction levels, etc. is set at the network side. Herein, the restriction levels can be set as required by a security applicant.

For example, the restriction levels can be categorized in three levels: the first level is to disable all the functions of a mobile terminal; the second level is to disable the functions of VP calling and voice calling; the third level is to disable the functions of sending a short message and sending an email, etc. For the identifier of a restricted user, it can also be feasible that only an identifier of a non-restricted user is set, which means that users except for the non-restricted user are all restricted users. In addition, the categorization of the restriction levels and which restriction level is adopted do not affect the protection scope of the present invention.

Step 101: a mobile terminal sends a location registration request upon being turned on.

Step 102: the network side traces the mobile terminal by a mobile phone positioning system upon receiving the location registration request.

Step 103: when determining that the mobile terminal has entered the restricted area, the network side judges whether the mobile terminal belongs to a restricted user, and if yes, determines the restricted types of function according to the restricted area information stored by the network side. Specifically, the network side judges whether the restricted area information includes the identifier of the mobile terminal, and if yes, determines that the mobile terminal belongs to the restricted user, otherwise, determines that the mobile terminal does not belong to the restricted user. Herein, the restricted types of function include functions of making a call, VP calling, sending a short message_{,} sending an e-mail, sending a picture, etc.

Step 104: upon receiving a call request with numbers of a calling user and a called user sent by the mobile terminal, the network side judges whether the calling user or the called user is the restricted user and determines the restricted types of function according to the numbers of the calling user and the called user. If one of the calling user and the called user is the restricted user, the network side forbids the two users to communicate by using the restricted types of function; if both the calling user and the called user are not restricted users, the network side allows the two users to communicate.

In the above process, because the function of the mobile terminal to be restricted is not determined according to the capability of each mobile terminal, there may be such cases as, for example, the mobile terminal is a terminal with only the function of ordinary voice communication while the function of video phone of the mobile terminal is also forbidden according to the restricted area information stored by the network side, which is unnecessary for the mobile terminal. Therefore, Step 101 may further include that: the mobile terminal set user capability information in the location registration request. Thus, the real user function to be forbidden can be determined by using the user capability information and the restricted area information when Step 103 is performed.

In the embodiment above, it is mainly controlled by the network side whether communication is forbidden. In practice, the function of forbidding communication can also be achieved by setting an appropriate function or parameter of a mobile phone.

The main idea of the second embodiment is that: restricted area information is set in a mobile terminal before the mobile terminal enters the restricted area, and a wireless service broadcast center broadcasts the restricted area information in the restricted area, including an identifier of the restricted area and a restricted function of the restricted area. The mobile terminal receives the restricted area information, and compares the received restricted area information with the identifier of the restricted area set in the mobile terminal; if the broadcasted information includes the identifier of the restricted area stored in the mobile terminal, the mobile terminal determines that it has entered the restricted area, and then cancels the restricted function in the restricted area.

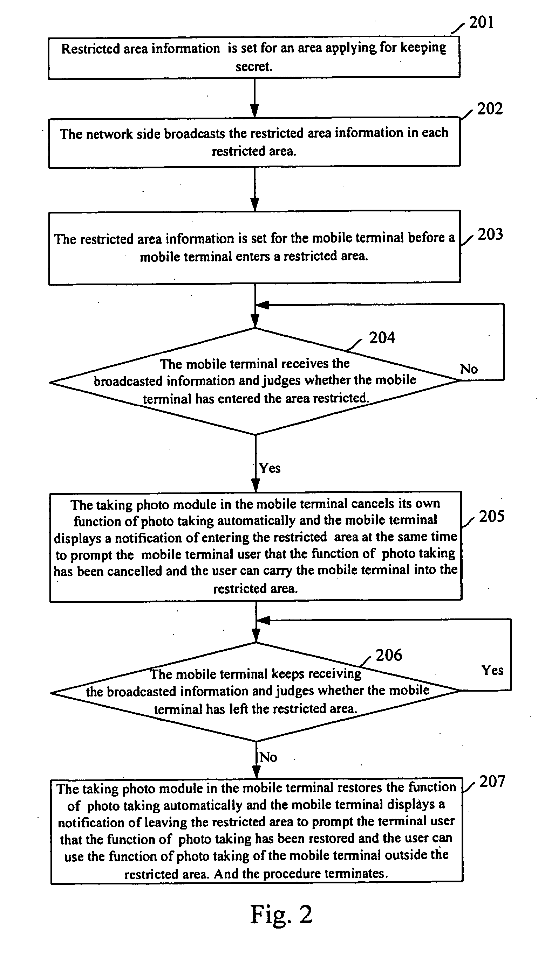

As shown in Fig.2, the detailed steps of this embodiment are as follows.

Step 201: restricted area information is set for an area applying for keeping secret.

When an application for keeping the area secret is proposed to an operator, the operator sets the restricted area information for the area, where the restricted area information includes an identifier of the restricted area, an identifier of the administrator of the restricted area, and the location of the restricted area.

Step 202: the network side broadcasts the restricted area information in each restricted area, that is, all the mobile terminals entering each restricted area will receive the broadcast and are able to identify the restricted area information in the broadcast. However, mobile terminals can not receive the broadcast in a non-restricted area.

The restricted area information broadcasted in the restricted area at least includes that of the current restricted area, or it can at most include that of all the restricted areas. Furthermore, the broadcasted restricted area information of each area includes at least one of the identifier of the restricted area, the identifier of the administrator of the restricted area and the location of the restricted area, which are set for the corresponding restricted area in Step 201.

In a mobile communication network, a broadcast service is generally implemented as follows. A cell broadcast center is set in the mobile communication network, used for authorizing, initiating the cell broadcast service in a cell, and sending broadcast contents according to a scheduled time plan. Multiple cell broadcast entities can also be set in the mobile communication network and each cell broadcast entity corresponds to one or multiple cells. Each cell broadcast entity first submits broadcast messages and broadcast parameters of its own to the cell broadcast center; then the cell broadcast center controls or manages the messages from the different cell broadcast entities, sends an operation command to a base station controller, and initiates a cell broadcast service. The base station controller interprets the received operation command, stores and sends the operation command to the base stations after receiving the operation command, and then the base station controls the flow of the messages to be broadcasted and sends the messages to the mobile terminals. Herein, the method for broadcasting the restricted area information is not limited to the above method and other methods for implementing a broadcast service may also be adopted. The methods for implementing a broadcast service are not the focus of the present invention will not be described in detail.

Step 203: The restricted area information is set for a mobile terminal before the mobile terminal enters the restricted area and the setting can be implemented by the administrator of the restricted area that the mobile terminal has currently entered.

The restricted area information set for the mobile terminal can be a random combination of the several pieces of the restricted area information broadcasted in Step 202. Furthermore, a terminal positioning enabling parameter can be further set for the mobile terminal. And the terminal positioning enabling parameter can be set uniquely for the mobile terminal in the case that the restricted area information broadcasted in Step 202 includes at least the location of the restricted area. Because the mobile terminal will initiate the existing positioning process to acquire the location information of the current area where it is currently located, once the terminal positioning enabling parameter is set in the mobile terminal, the mobile terminal can acquire the location of the area where is currently located and store the location of the area as a piece of restricted area information through the positioning enabling parameter set for the mobile terminal. As can be seen from the above, the restricted area information stored in the mobile terminal includes the identifier of the restricted area, or the identifier of the administrator of the restricted area, or the location of the restricted area, or the location of the area of the mobile terminal acquired through the positioning of the mobile terminal itself, or the random combination of the above.

Herein, the restricted area information and the terminal positioning enabling parameter can be automatically downloaded to the mobile terminal through sending by an operator a short message (SMS) or a multimedia message (MMS) to the mobile terminal in manner of Over the Air (OTA) or can be set manually in the mobile terminal by the administrator of the restricted area. In addition, the terminal positioning enabling parameter can be delivered to the mobile terminal in manner of broadcast.

The administrator of the restricted area can choose one of the above two manners for setting the restricted area information to perform administration according to manners for entering the restricted area and features of entrances of the restricted area. For example, the restricted area information can be set manually in manner of the human-computer interface by the administrator in the case that there is only one entrance of the restricted area, that is, it does not need many administrators; in the case that there are multiple entrances of the restricted area and many persons to enter the restricted area, it is difficult to implement the method in manner of the human-computer interface and it is not convenient to perform administration. Therefore, the restricted area information can be downloaded automatically in manner of OTA downloading.

The restricted area information described herein can be stored in a mobile equipment (ME) or in a Universal Integrated Circuit Card (UICC) of the mobile terminal since the mobile terminal is composed of the ME and the UICC. In the case that the method is applied to a CDMA network, the UICC is a User Identity Module (UIM) card; in the case that the method is applied to a GSM/GPRS network, the UICC is a Subscriber Identification Module (SIM) card; in the case that the method is applied to a WCDMA network, the UICC is a Universal Subscriber Identity Module (USIM) card. Of course, the UICC can be other intelligent cards on practical demands but it does not affect the effectiveness of the present invention.

Step 204: the mobile terminal receives the broadcasted information in Step 202 and judges whether the mobile terminal has entered the restricted area. If yes, continue to Step 205; otherwise, cycle back to Step 204.

Step 205: the mobile terminal cancels the corresponding restricted function and at the same time, displays a notification of entering the restricted area to prompt the mobile terminal that the restricted function has been cancelled and the user can carry the mobile terminal into the restricted area. The restricted function may include photo taking, camera shooting and recording. For instance, when the function of photo taking is cancelled, because the mobile terminal having the function of photo taking includes a taking photo module, a communication module and an Input/Output device, and cancelling the function of photo taking by the taking photo module does not affect the function of the communication module, the mobile terminal can still use the function of communication though the mobile terminal can not use the function of photo taking at this time. Thereby, the secret information of the restricted area could not be stolen by using the method of photo taking, and the user can use the function of communication of the mobile terminal normally. Apparently, if the function of camera shooting or recording is to be cancelled, it is only needed to disable the function of the corresponding module.

In addition, information, such as a revision password, can be set in the mobile terminal when the restricted area information is set for the user terminal in Step 203. Thus, the mobile terminal will ask the user to input the revision password when the user tries to revise the information, such as the identifier of the restricted area, the identifier of the administrator of the restricted area and the location of the restricted area upon having entered the restricted area. Thereby, the restricted area information set by the administrator of the restricted area is protected and the user is prevented from revising the restricted area information of the mobile terminal and turning on the function of photo taking upon carrying the mobile terminal into the restricted area.

Step 206: the mobile terminal keeps receiving the broadcasted information in Step 202 and judges whether the mobile terminal has left the restricted area. If yes, continue to Step 207; otherwise, cycle back to Step 206.

Step 207: the mobile terminal restores the restricted function automatically and displays a notification of leaving the restricted area to prompt the terminal user that the restricted function has been restored and the user can use the restricted function of the mobile terminal outside the restricted area. The procedure terminates.

In the above solution, the mobile terminal acquires the restricted area information in step 203, including the identifier of the restricted area, the identifier of the administrator of the restricted area, the location of the restricted area or the location of the area where it is located. Therefore, in Step 204 and Step 206, the mobile terminal can judge whether the mobile terminal has entered or left the restricted area by judging whether the restricted area information acquired by the mobile terminal and the corresponding item in the broadcasted restricted area information are the same.

For example, there can be the following specific judging principle:
judging that the mobile terminal has entered the restricted area if one piece of the information stored by the mobile terminal, such as the identifier of the restricted area, the identifier of the administrator of the restricted area, the location of the restricted area or the location of the area of the mobile terminal, is the same with the corresponding item in the broadcasted information received by the mobile terminal, such as the identifier of the restricted area, the identifier of the administrator of the restricted area, the location of the restricted area or the location of the area the mobile terminal is located in; otherwise, determining that the mobile terminal has not entered the restricted area;
judging that the mobile terminal has left the restricted area if the information stored by the mobile terminal, such as the identifier of the restricted area, the identifier of the administrator of the restricted area, the location of the restricted area or the location of the area of the mobile terminal, is different from the corresponding item in the broadcasted information received by the mobile terminal, such as the identifier of the restricted area, the identifier of the administrator of the restricted area, the location of the restricted area, or the location of the area where the mobile terminal is located; otherwise, determining that the mobile terminal has not left the restricted area.

Herein, which item or which items of the information to be judged in the above judging is related to the practical administrating manner adopted by the administrator of the restricted area and are not limited specifically. Because at least one piece of the restricted area information stored by the mobile terminal corresponds to one piece of the broadcasted information restricted in Step 202 as described above, it is guaranteed, in accordance with the embodiment, that whether the mobile terminal has entered or left the restricted area is judged exactly.

In addition, another method for restricting a function of a mobile terminal in a specific area can be adopted in the embodiment, and the method specifically includes that:
1) the network side sets location information of the restricted area, sets a terminal positioning enabling parameter for the mobile terminal, then keeps broadcasting the location information of the restricted area and the terminal positioning enabling parameter in all the areas. Herein, the broadcasted location information of the restricted area can be location information of one or several restricted areas, or be location information of all the restricted areas. Furthermore, the broadcasted location information of restricted areas in the restricted area includes at least the location information of the restricted area itself;
2) the mobile terminal keeps receiving broadcasted messages with the terminal positioning enabling parameter and the location information of the restricted area. The mobile terminal initiates a terminal positioning procedure to get the location of the current area of itself each time it receives the terminal positioning enabling parameter. The mobile terminal compares the location of the area of itself acquired by positioning with each of the location information of the restricted areas in the broadcasted messages upon acquiring the location of the area of itself, judges whether the mobile terminal is located in the restricted area according to the result of the comparing, and forbids the restricted function of the mobile terminal if the mobile terminal is in the restricted area, otherwise, restores the restricted function.

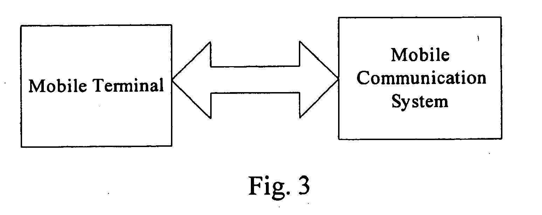

As shown in Fig.3, the system in accordance with an embodiment of the present invention includes a mobile communication network and a mobile terminal.

Furthermore, the interaction between a mobile communication network and a mobile terminal can be implemented by the following three solutions based on the above method.

Solution 1: the mobile communication network is a mobile communication network with a positioning system and is used for storing restricted area information including at least an identifier of the restricted area, an identifier of a restricted user in the restricted area and a restricted user function in the restricted area. Furthermore, the mobile communication network starts the positioning system to trace a mobile terminal when the mobile terminal is turned on, and restricts the mobile terminal to execute the user function when determining that the mobile terminal is located in the restricted area saved by the mobile communication network.

Solution 2: the mobile communication network is used for broadcasting in real time restricted area information including an identifier of the restricted area, a identifier of a restricted user in the restricted area and a user function restricted in the restricted area; the mobile terminal is used for saving the restricted area information of its own, comparing the received restricted area information with that saved by the mobile terminal itself to judge whether the two are the same upon entering the area and receiving the broadcasted information, and if the two are the same, disabling the user function.

Solution 3: the mobile communication network is used for broadcasting in real time restricted area information and a positioning enabling parameter preset and providing location information of a mobile terminal for the mobile terminal according to the positioning enabling parameter sent by the mobile terminal. The restricted area information includes an identifier of the restricted area, an identifier of a restricted user in the restricted area and a user function restricted in the restricted area. The mobile terminal acquires the location information of the mobile terminal itself from the mobile communication network using the received positioning enabling parameter, judges whether the location of the mobile terminal is in the restricted area according to the received restricted area information, and disables the user function when determining that the mobile terminal is in the restricted area. To sum up, the foregoing are only preferred embodiments of the present invention and not for use in limiting protection scope thereof.

## Claims

1. A method for keeping a scene secret, **characterized by**, comprising:
setting (100), at a network side, restricted area information containing an identifier of the restricted area, an identifier of a restricted user and a restricted user function in the restricted area;
tracing (102), by the network side, the mobile terminal upon receiving (101) a location registration request from the mobile terminal, wherein the location registration request contains user capability information of the mobile terminal and is sent by the mobile terminal when the mobile terminal is turned on; and
judging (103), by the network side, whether the mobile terminal belongs to the restricted user according to the restricted area information if determining that the mobile terminal has entered the restricted area, and forbidding the mobile terminal to execute the restricted user function according to the user capability information if the mobile terminal belongs to the restricted user.

2. The method of Claim 1, wherein said tracing the mobile terminal upon receiving the location registration request comprises:
tracing the mobile terminal upon receiving the location registration request by a mobile terminal positioning system;
said judging whether the mobile terminal has entered the restricted area comprises:
judging whether the location of the mobile terminal belongs to the area corresponding to the identifier of the restricted area, if yes, determining that the mobile terminal has entered the restricted area; otherwise, determining that the mobile terminal is out of the restricted area.

3. The method of Claim 1, further comprising:
upon receiving a call request containing numbers of a calling user and a called user sent by the mobile terminal,
judging, by the network side, whether the calling user or the called user is the restricted user, and determining the restricted use function according to the numbers of the calling user and the called user;
forbidding, by the network side, communicate between the calling user and the called user by using the restricted user function if one of the calling user and the called user is the restricted user; allowing, by the network side, communicating between the calling user and the called user if both the calling user and the called user are not restricted users.

4. The method of Claim 1, wherein said forbidding the mobile terminal to execute the restricted user function comprises:
sending a communication forbidding notification containing the restricted user function of the mobile terminal to the mobile terminal;
disabling the corresponding user function according to the restricted user function in the communication forbidding notification upon receiving the communication forbidding notification.

5. The method of Claim 1, wherein the restricted user function comprises a function of communication; and said forbidding the mobile terminal to execute the restricted user function comprises:
forbidding the communication by building no connection for the user or refusing to transmit an information flow.

6. The method of Claim 1, wherein the restricted user function comprises a function of camera shooting and/or a function of recording, the method further comprising:
sending a function forbidding notification to the mobile terminal;
disabling the restricted user function.

7. The method of Claim 1, wherein the restricted user function comprises at least one of functions of camera shooting, recording, answering a phone call and sending a connection request.

8. The method of Claim 1, wherein the restricted user function is determined by restriction levels.

9. A base station for keeping a scene secret, **characterized by**, comprising:
a first unit, adapted to store restricted area information containing an identifier of the restricted area, an identifier of a restricted user and a restricted user function in the restricted area;
a second unit, adapted to trace a mobile terminal when receiving a location registration request from a mobile terminal, wherein the location registration request contains user capability information of the mobile terminal and is sent by the mobile terminal when the mobile terminal is turned on, judge whether the mobile terminal belongs to the restricted user according to the restricted area information if determining that the mobile terminal has entered the restricted area, and forbid the mobile terminal to execute the restricted user function according to user capability information of the mobile terminal if the mobile terminal belongs to the restricted user.

10. A system for keeping a scene secret, **characterized by**, comprising:
a mobile terminal and a base station described in Claim 9.

## Patentansprüche

1. Verfahren zum Geheimhalten einer Szene, **dadurch gekennzeichnet, dass** es die folgenden Schritte umfasst:
Setzen (100) von Beschränkungsgebietinformationen auf einer Netzseite, die eine Kennung des beschränkten Gebiets, eine Kennung eines beschränkten Benutzers und eine beschränkte Benutzerfunktion in dem beschränkten Gebiet enthalten;
Verfolgen (102) des mobilen Endgeräts durch die Netzseite beim Empfang (101) einer Ortsregistrierungsanforderung von dem mobilen Endgerät, wobei die Ortsregistrierungsanforderung Benutzerfähigkeitsinformationen des mobilen Endgeräts enthält und durch das mobile Endgerät gesendet wird, wenn das mobile Endgerät eingeschaltet wird; und
Beurteilen (103) durch die Netzseite, ob das mobile Endgerät zu dem beschränkten Benutzer gehört, gemäß den Beschränkungsgebietinformationen, wenn bestimmt wird, dass das mobile Endgerät in das beschränkte Gebiet eingetreten ist, und gemäß den Benutzerfähigkeitsinformationen dem mobilen Endgerät Verbieten, die beschränkte Benutzerfunktion auszuführen, wenn das mobile Endgerät zu dem beschränkten Benutzer gehört.

2. Verfahren nach Anspruch 1, wobei das Verfolgen des mobilen Endgeräts beim Empfang der Ortsregistrierungsanforderung Folgendes umfasst:
Verfolgen des mobilen Endgeräts beim Empfang der Ortsregistrierungsanforderung durch ein System der Positionsbestimmung mobiler Endgeräte;
wobei das Beurteilen, ob das mobile Endgerät in das beschränkte Gebiet eingetreten ist, Folgendes umfasst:
Beurteilen, ob der Ort des mobilen Endgeräts zu dem Gebiet gehört, das der Kennung des beschränkten Gebiets entspricht, wenn ja, Bestimmen, dass das mobile Endgerät in das beschränkte Gebiet eingetreten ist; andernfalls Bestimmen, dass sich das mobile Endgerät außerhalb des beschränkten Gebiets befindet.

3. Verfahren nach Anspruch 1, ferner mit den folgenden Schritten:
beim Empfang einer von dem mobilen Endgerät gesendeten Rufanforderung, die Nummern eines anrufenden Benutzers und eines angerufenen Benutzers enthält,
Beurteilen durch die Netzseite, ob der anrufende Benutzer oder der angerufene Benutzer der beschränkte Benutzer ist, und Bestimmen der beschränkten Nutzungsfunktion gemäß den Nummern des anrufenden Benutzers und des angerufenen Benutzers;
Verbieten durch die Netzseite der Kommunikation zwischen dem anrufenden Benutzer und dem angerufenen Benutzer durch Verwendung der beschränkten Benutzerfunktion, wenn der anrufende Benutzer oder der angerufene Benutzer der beschränkte Benutzer ist; Erlauben durch die Netzseite der Kommunikation zwischen dem anrufenden Benutzer und dem angerufenen Benutzer, wenn der anrufende Benutzer und der angerufene Benutzer beide nicht beschränkte Benutzer sind.

4. Verfahren nach Anspruch 1, wobei das dem mobilen Endgerät Verbieten, die beschränkte Benutzerfunktion auszuführen, Folgendes umfasst:
Senden einer Kommunikations-Verbotsbenachrichtigung, die die beschränkte Benutzerfunktion des mobilen Endgeräts enthält, zu dem mobilen Endgerät;
Sperren der entsprechenden Benutzerfunktion gemäß der beschränkten Benutzerfunktion in der Kommunikations-Verbotsbenachrichtigung beim Empfang der Kommunikations-Verbotsbenachrichtigung.

5. Verfahren nach Anspruch 1, wobei die beschränkte Benutzerfunktion eine Funktion der Kommunikation umfasst; und
das dem mobilen Endgerät Verbieten, die beschränkte Benutzerfunktion auszuführen, Folgendes umfasst:
Verbieten der Kommunikation, indem keine Verbindung für den Benutzer aufgebaut wird, oder durch Verweigerung des Sendens eines Informationsflusses.

6. Verfahren nach Anspruch 1, wobei die beschränkte Benutzerfunktion eine Funktion der Kameraaufnahme und/oder eine Funktion des Aufzeichnens umfasst, wobei das Verfahren ferner die folgenden Schritte umfasst:
Senden einer Funktionsverbotsbenachrichtigung zu dem mobilen Endgerät;
Sperren der beschränkten Benutzerfunktion.

7. Verfahren nach Anspruch 1, wobei die beschränkte Benutzerfunktion mindestens eine der folgenden Funktionen umfasst: Kameraaufnahmen, Aufzeichnung, Entgegennahme eines Telefonanrufs und Senden einer Verbindungsanforderung.

8. Verfahren nach Anspruch 1, wobei die beschränkte Benutzerfunktion durch Beschränkungsstufen bestimmt wird.

9. Basisstation zum Geheimhalten einer Szene, **dadurch gekennzeichnet, dass** sie Folgendes umfasst:
eine erste Einheit, die dafür ausgelegt ist, Beschränkungsgebietinformationen zu speichern, die eine Kennung des beschränkten Gebiets, eine Kennung eines beschränkten Benutzers und eine beschränkte Benutzerfunktion in dem beschränkten Gebiet enthalten;
eine zweite Einheit, die dafür ausgelegt ist, beim Empfang einer Ortsregistrierungsanforderung von einem mobilen Endgerät ein mobiles Endgerät zu verfolgen, wobei die Ortsregistrierungsanforderung Benutzerfähigkeitsinformationen des mobilen Endgeräts enthält und durch das mobile Endgerät gesendet wird, wenn das mobile Endgerät eingeschaltet wird, gemäß den Beschränkungsgebietinformationen zu beurteilen, ob das mobile Endgerät zu dem beschränkten Benutzer gehört, wenn bestimmt wird, dass das mobile Endgerät in das beschränkte Gebiet eingetreten ist, und es dem mobilen Endgerät gemäß Benutzerfähigkeitsinformationen des mobilen Endgeräts zu verbieten, die beschränkte Benutzerfunktion auszuführen, wenn das mobile Endgerät zu dem beschränkten Benutzer gehört.

10. System zum Geheimhalten einer Szene, **dadurch gekennzeichnet, dass** es ein mobiles Endgerät und eine Basisstation nach Anspruch 9 umfasst.

## Revendications

1. Procédé pour conserver un site secret, **caractérisé par le fait qu'**il comprend :
l'établissement (100), à un côté réseau, d'informations de zone contrôlée contenant un identifiant de la zone contrôlée, un identifiant d'un utilisateur assujetti à des restrictions et une fonction d'utilisateur assujetti à des restrictions dans la zone contrôlée ;
le suivi (102), par le côté réseau, du terminal mobile sur réception (101) d'une requête d'enregistrement de position depuis le terminal mobile, dans lequel la requête d'enregistrement de position contient des informations de capacité d'utilisateur du terminal mobile et est envoyée par le terminal mobile quand le terminal mobile est mis en marche ; et
l'évaluation (103), par le côté réseau, de ce que le terminal mobile appartient ou non à l'utilisateur assujetti à des restrictions en fonction des informations de zone contrôlée s'il est déterminé que le terminal mobile a pénétré dans la zone contrôlée, et l'interdiction au terminal mobile d'exécuter la fonction d'utilisateur assujetti à des restrictions en fonction des informations de capacité d'utilisateur si le terminal mobile appartient à l'utilisateur assujetti à des restrictions.

2. Procédé selon la revendication 1, dans lequel ledit suivi du terminal mobile sur réception de la requête d'enregistrement de position comprend :
le suivi du terminal mobile sur réception de la requête d'enregistrement de position par un système de positionnement de terminal mobile ;
ladite évaluation de ce que le terminal mobile a pénétré ou non dans la zone contrôlée comprend :
l'évaluation de ce que la position du terminal mobile appartient ou non à la zone correspondant à l'identifiant de la zone contrôlée, dans l'affirmative, la détermination que le terminal mobile a pénétré dans la zone contrôlée ; dans la négative, la détermination que le terminal mobile se trouve en dehors de la zone contrôlée.

3. Procédé selon la revendication 1, comprenant en outre :
sur réception d'une requête d'appel contenant des numéros d'un utilisateur appelant et d'un utilisateur appelé envoyés par le terminal mobile,
l'évaluation, par le côté réseau, de ce que l'utilisateur appelant ou l'utilisateur appelé est ou non l'utilisateur assujetti à des restrictions, et la détermination de la fonction d'utilisateur assujetti à des restrictions en fonction des numéros de l'utilisateur appelant et de l'utilisateur appelé ;
l'interdiction, par le côté réseau, de la communication entre l'utilisateur appelant et l'utilisateur appelé en utilisant la fonction d'utilisateur assujetti à des restrictions si l'un de l'utilisateur appelant et de l'utilisateur appelé est l'utilisateur assujetti à des restrictions ; l'autorisation, par le côté réseau, de la communication entre l'utilisateur appelant et l'utilisateur appelé si ni l'utilisateur appelant ni l'utilisateur appelé ne sont des utilisateurs assujettis à des restrictions.

4. Procédé selon la revendication 1, dans lequel ladite interdiction au terminal mobile d'exécuter la fonction d'utilisateur assujetti à des restrictions comprend :
l'envoi au terminal mobile d'une notification d'interdiction de communication contenant la fonction d'utilisateur assujetti à des restrictions du terminal mobile ;
la désactivation de la fonction d'utilisateur correspondante en fonction de la fonction d'utilisateur assujetti à des restrictions dans la notification d'interdiction de communication sur réception de la notification d'interdiction de communication.

5. Procédé selon la revendication 1, dans lequel la fonction d'utilisateur assujetti à des restrictions comprend une fonction de communication ; et ladite interdiction au terminal mobile d'exécuter la fonction d'utilisateur assujetti à des restrictions comprend :
l'interdiction de la communication en n'établissant aucune connexion pour l'utilisateur ou en refusant de transmettre un flux d'information.

6. Procédé selon la revendication 1, dans lequel la fonction d'utilisateur assujetti à des restrictions comprend une fonction de prise de vue et/ou une fonction d'enregistrement, le procédé comprenant en outre :
l'envoi d'une notification d'interdiction de fonction au terminal mobile ;
la désactivation de la fonction d'utilisateur assujetti à des restrictions.

7. Procédé selon la revendication 1, dans lequel la fonction d'utilisateur assujetti à des restrictions comprend au moins l'une des fonctions de prise de vue, d'enregistrement, de réponse à un appel téléphonique et d'envoi d'une requête de connexion.

8. Procédé selon la revendication 1, dans lequel la fonction d'utilisateur assujetti à des restrictions est déterminée par des niveaux de restriction.

9. Station de base pour conserver un site secret, **caractérisée par le fait qu'**elle comprend :
une première unité, adaptée pour stocker des informations de zone contrôlée contenant un identifiant de la zone contrôlée, un identifiant d'un utilisateur assujetti à des restrictions et une fonction d'utilisateur assujetti à des restrictions dans la zone contrôlée ;
une seconde unité, adaptée pour suivre un terminal mobile quand elle reçoit une requête d'enregistrement de position depuis un terminal mobile, dans lequel la requête d'enregistrement de position contient des informations de capacité d'utilisateur du terminal mobile et est envoyée par le terminal mobile quand le terminal mobile est mis en marche, évaluer si le terminal mobile appartient ou non à l'utilisateur assujetti à des restrictions en fonction des informations de zone contrôlée s'il est déterminé que le terminal mobile a pénétré dans la zone contrôlée, et interdire au terminal mobile d'exécuter la fonction d'utilisateur assujetti à des restrictions en fonction d'informations de capacité d'utilisateur du terminal mobile si le terminal mobile appartient à l'utilisateur assujetti à des restrictions.

10. Système pour conserver un site secret, **caractérisé par le fait qu'**il comprend :
un terminal mobile et une station de base décrite à la revendication 9.
